# EUROPEAN PATENT APPLICATION

(11) **EP 1 219 992 A1**
(43) Date of publication of application: **03.07.2002**
(21) Application number: 01310778.4
(22) Date of filing: 21.12.2001
(51) Int. Cl.: G02B 6/38

(54) **Optical fiber ribbon termination and manufacturing method therefor**

(30) Priority: 25.12.2000 JP 2000392675; 21.11.2001 JP 2001355751
(71) Applicant: NGK INSULATORS, LTD., Nagoya-City, Aichi Prefecture 467-8530 (JP)
(72) Inventor: Matsumoto, Akira, Nagoya City, Aichi Pref 467-8530 (JP); Fukuyama, Masashi, Nagoya City, Aichi Pref 467-8530 (JP)
(74) Representative: Paget, Hugh Charles Edward

(57) **Abstract**

A ribbon fiber (1) is formed of a plurality of aligned processed optical fibers (10) having a bare fiber portion subjected to predetermined fabrication, and a ribbon portion (2) which is 2 to 300 mm in length formed at part of the bar portions. The ribbon fiber is manufactured so that the processed fibers are aligned with a precise pitch width while a length is adjusted so that a lengthwise position of the portion processed as predetermined has a predetermined accuracy, and then a part thereof is fixed by and coated with an adhesive to form the ribbon portion. Thereby a ribbon fiber is manufactured easily and at low cost. The ribbon optical fiber can be used to form a fiber array or a half-pitch fiber array.

## Description

### Background of the Invention and Related Art Statement

The present invention relates to a ribbon fiber and a manufacturing method therefor, and an optical fiber array using the ribbon fiber.

In recent years, with the increase in the density of optical fiber, the number of fibers in a planar lightwave circuit (PLC) has increased. Along with the use of multiple fibers, development has been carried on with the aim of shortening the conventional standard waveguide pitch (250 µm is decreased to, for example, 127 µm, about a half) in order to further increase the density while avoiding a larger size of waveguide element. Along with the increased optical fiber density and shortened waveguide pitch, development has been carried on with the aim of decreasing a pitch between fibers in a fiber array connected to an optical fiber.

When the above-described fiber array is manufactured, a ribbon fiber has been used increasingly.

The ordinary SM (single mode) ribbon fiber has no problem even if any portion thereof is used because it does not vary in configuration in the lengthwise direction.

Also, in the process of making the SM (single mode) ribbon fiber, the necessary number (eight for a ribbon fiber with eight optical fibers) of optical fibers of several kilometers to several tens kilometers in length (coating diameter: 250 µm) are bundled in parallel, and an outside layer coating is applied to make a ribbon.

At this time, the reeling-out process of optical fibers, the ribbon-making process, and the reeling-in process of ribbon are automatically performed in a reel. In this case, the positioning in the lengthwise direction of the bundled optical fibers need not be performed strictly. Even if unevenness (for example, about several tens centimeters at both ends) occurs at both ends of ribbon fiber, a finished product can be obtained by cutting off the uneven portion.

However, to cope with the requirements in the various fields of applications, a mono fiber being called as a specially processed fiber has recently been developed.

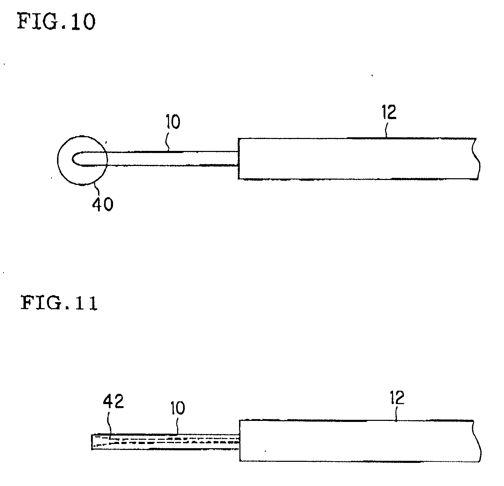

For example, in the case of a lensed fiber and a TEC fiber (see Fig. 11), the principal application is a connection with a laser diode. In this case, the positional accuracy in the lengthwise direction of a portion processed as predetermined is required to be about =10 µm.

Also, in the case of a metalized fiber, the principal application is package sealing of a device. Any type of sealing work is usually performed in a portion of package wall, and a coating edge (coating removal start portion) must be caused to exist in this sealing portion. Therefore, the positional accuracy in the lengthwise direction of a portion processed as predetermined is required to be in the dimension of about several millimeters.

Further, in the case of a fiber formed by fusion-welding different kinds of fibers or a grating fiber, since the total length of fiber array is usually about 10 mm, although a length corresponding to the greatest fiber array length may be allowed as a difference in the positional accuracy among the aligned fibers, it is important where a coating edge should be exist within in the length of the fiber array. Therefore, the positional accuracy in the lengthwise direction of a portion processed as predetermined is required to be about ±5 mm.

These types of special optical fibers are difficult to fabricate from a ribbon fiber into a predetermined form, or cannot exhibit sufficient characteristics, so that they generally undergo predetermined fabrication in a state of single fiber.

For the above-described reasons, when a fiber array is manufactured by using the specially processed fibers shown in Figs. 10 to 14, since the specially processed fibers are not constructed so that they can be used even if they are cut at any particular-portion like the SM (single mode) fiber, it is indispensable to adjust the lengthwise position of portions processed as predetermined of the single fibers to be bundled_so as to keep bare portions of the formed fiber array consisting of several special optical fibers within the predetermined accuracy.

In this case, however, since all of the bare portions of the specially processed fibers must be adjusted, there arises a problem in that as the number of fibers increases, the work efficiency and yield decrease.

### Summary of the Invention

The present invention seeks to solve the above problems with the prior art. The invention provides an optical ribbon fiber in which when an optical fiber array is manufactured using processed fibers, which have a portion processed as predetermined of a fiber subjected to predetermined fabrication, the lengthwise position of each portion processed as predetermined needs not be adjusted, so that not only fiber array with multiple fibers and a half-pitch fiber array can be manufactured easily but also the work efficiency and yield can be improved Also provided is a manufacturing method, and an optical fiber array using the ribbon fiber.

According to the first aspect of the present invention, there is provided a ribbon fiber which comprises a plural number of aligned specially processed fibers; said specially processed fibers having a bare fiber portion being formed by subjecting fibers to predetermined processing and a ribbon portion of 2 to 300 mm in length formed in at least some of said treated portion.

In this specification, the fiber having a bare fiber portion not subjected to predetermined fabrication means, for example, a fiber having a bare fiber portion formed by drawing a preform, and includes a fiber formed by coating a bare fiber.

That is, the cross-sectional view in the lengthwise direction of fiber not subjected to predetermined fabrication is almost the same. For example, a single mode fiber, a multiple mode fiber, a polarization-preserving fiber, or the like can be cited.

Also, the specially processed fibers means fibers having a single to plural portions specially processed on at least a portion corresponding to a bare fiber portion in the lengthwise direction of the bare fiber, and the portion(s) specially processed means a portion(s) subjected to the predetermined processing (or fabrication).

Also, in the present invention, the specially processed fibers are preferably any one of a lensed fiber, a TEC fiber, a metalized fiber, a fiber formed by fusion-welding different kinds of fibers, and a grating fiber.

Further, in the present invention, the ribbon portion preferably is provided with a positioning means, and the positioning means is preferably formed as a series of convex and concave shapes.

Preferably, said series of convex and concave shapes are disposed with a regular pitch or discontinuously, and said series of convex and concave shapes are formed as a saw tooth shape or a curved wavy shape.

Also, according to the present invention (invention of a second aspect), there is provided a manufacturing method for a ribbon fiber, which comprises steps of aligning, with a precise pitch width, a plural number of specially processed fibers; said specially processed fibers having a portion processed as predetermined being formed by subjecting fibers having a bare fiber portion to predetermined processing while adjusting lengthwise the direction of specially processed fibers so as to align a position of said portion processed as predetermined at a predetermined accuracy, and then fixing and coating a part of said portion processed as predetermined with an adhesive to form a ribbon portion.

Further, according to the present invention (invention of a third aspect), there is provided a manufacturing method for a ribbon fiber, which comprises steps of
preparing a ribbon-making jig consisting of an upper mold a lower mold having a ribbon-making groove for making a ribbon and a lower mold having a ribbon-making groove for making a ribbon,
aligning, with a precise pitch width, specially processed fibers; said specially processed fibers having a portion processed as predetermined being formed by subjecting fibers having a bare fiber portion to predetermined processing, in a V-groove portion provided at both ends of the ribbon-making groove of said lower mold while adjusting lengthwise the direction of specially processed fibers so as to align a position of said portion processed as predetermined at a predetermined accuracy,
thereafter pouring an adhesive into a mold formed by the ribbon-making grooves in said upper and lower molds and curing said adhesive to form a ribbon portion, and
removing said upper and lower molds to obtain a ribbon fiber.

Furthermore, in the present invention, the specially processed fibers are preferably any one of a lensed fiber, a TEC fiber, a metalized fiber, a fiber formed by fusion-welding different kinds of fibers, and a grating fiber.

Also, in the present invention, it is preferable to apply an adhesive to a portion in which said specially processed fibers come into contact with each other when the lengthwise position of the portion processed as predetermined is adjusted.

At this time, the adhesive preferably has a viscosity of 10000 cP or lower, and the adhesive is preferably a urethane acrylate resin.

Further, according to the present invention (invention of a fourth aspect), there is provided an optical fiber array which is manufactured by using any one of the above-described ribbon fibers.

### Brief Description of the Drawings

Fig. 1(a) is a left-hand side view, Fig. 1(b) is a front view, and Fig. 1(c) is a detailed view of Fig. 1(a), showing an example of a ribbon fiber in accordance with the present invention.
Fig. 2 is an explanatory view showing an example of a manufacturing method for a ribbon fiber in accordance with the present invention.
Fig. 3(a) is a left-hand side view, Fig. 3(b) is a front view, and Fig. 3(c) is a sectional view taken along a line A-A of Fig. 3(b), showing an example of a lower mold of a ribbon-making jig used in the present invention.
Figs. 4(a) and 4(b) are a front view and a sectional view taken along a A-A of Fig. 4(a), respectively, showing an example of an upper mold of a ribbon-making jig used in the present invention.
Fig. 5(a) is a left-hand side view, Fig. 5(b) is a front view, and Fig. 5(c) is a detailed view of Fig. 5(a), showing another example of a ribbon fiber in accordance with the present invention.
Fig. 6 (a) is an explanatory view showing a positional relationship for engaging a series of convex and concave shapes of ribbon fibers, and Fig. 6(b) is an explanatory view showing a state in which the ribbon fibers are lapped on each other, both drawings showing an example of application of the ribbon fiber shown in Fig. 5.
Fig. 7(a) to (i) shows the steps for a manufacturing method for the ribbon fiber shown in Fig. 5 (a) to Fig. 5 (c) as an explanatory view.
Figs. 8(a) and 8(b) are an explanatory view of an essential portion and a perspective explanatory view, respectively, showing an example of a method for adjusting lengthwise direction of specially processed fibers used in the present invention.
Figs. 9(a) and 9(b) are an explanatory view of an essential portion and a perspective explanatory view, respectively, showing another example of a method for adjusting lengthwise direction of specially processed fibers used in the present invention.
Fig. 10 is a schematic view showing specially processed fibers 1 (lensed fiber) used in the present invention.
Fig. 11 is a schematic view showing specially processed fibers 2 (TEC fiber) used in the present invention.
Fig. 12 is a schematic view showing specially processed fibers 3 (metalized fiber) used in the present invention.
Fig. 13 is a schematic view showing specially processed fibers 4 (fiber formed by fusion-welding different kinds of fibers) used in the present invention.
Fig. 14 is a schematic view showing specially processed fibers 5 (grating fiber) used in the present invention.
Fig. 15(a) is a left-hand side view, Fig. 15(b) is a front view, and Fig. 15(c) is a right-hand side view, showing an example of a half-pitch fiber array.

### Detailed Description of Preferred Embodiment

A ribbon fiber in accordance with the present invention is formed of a plural number of aligned specially processed fibers; said specially processed fibers having a portion processed as predetermined being formed by subjecting fibers having a bare fiber portion to predetermined processing and a ribbon portion of 2 to 300 mm in length formed in at least some of said treated portion.

Therefore, when an optical fiber array using the specially processed fibers mentioned above is manufactured, the lengthwise position in the portion processed as predetermined of the specially processed fiber need not be adjusted, so that not only an optical fiber array with multiple fibers can be manufactured easily but also the work efficiency and yield can be improved.

The present invention will now be described in more detail with reference to the accompanying drawings.

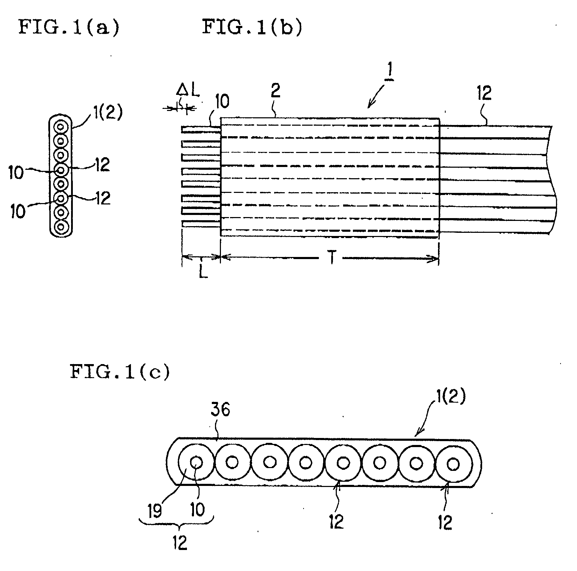

Fig. 1(a) is a left-hand side view, Fig. 1(b) is a front view, and Fig. 1(c) is a detailed view of Fig. 1(a), showing an example of the ribbon fiber in accordance with the present invention.

As shown in Figs. 1(a) and 1(b), a ribbon fiber 1 in accordance with the present invention is disposed in the almost same plane, consists of a plurality of (eight fibers in Figs. 1(a) and 1(b)) specially processed fibers 12 extending longitudinally so as to be adjacent to each other substantially in parallel, and partially has a ribbon portion 2 of 2 to 300 mm in length (T).

At this time, the bare fiber portion may be an optical fiber itself formed by drawing a preform, and when it has been treated or processed, it is treated or processed almost wholly in its lengthwise direction.

The manufacturing method for an optical fiber is not subject to any special restriction, and any method for manufacturing an optical fiber into the same configuration as that of the above-described optical fiber is embraced naturally.

Also, the specially processed fibers used in the present invention are a fiber in which the bare fiber portion is subjected to predetermined processing (or fabrication) (partially treated or processed (or fabricated) in the lengthwise direction of the portion processed as predetermined to provide some characteristics), and some types of specially processed fibers, for example, shown in Figs. 10 to 14 are used.

At this time, unlike the ordinary SM (single mode) ribbon fiber, the ribbon fiber in accordance with the present invention cannot be subjected to rework (for example, the tip end portion is removed in a state of a ribbon, and the coating is removed again). Therefore, when the ribbon fiber is manufactured, it is indispensable to adjust lengthwise direction of the portion processed as predetermined so as to have a predetermined accuracy.

For the ribbon fiber in accordance with the present invention, as shown in Fig. 1(c), the ribbon portion 2 is constructed so that the specially processed fibers 12 are fixed by and coated with an adhesive 36, and are preferably aligned in such a manner that the lengthwise positional accuracy ΔL of a portion processed as predetermined is ±10 µm.

The reason for this is that especially when a lensed fiber (see Fig. 10) or a TEC fiber (see Fig. 11), of the types of specially processed fibers 12, is made into a ribbon form, since the principal application is a connection with an LD, the lengthwise positional accuracy ΔL of portion processed as predetermined is required to be about ±10 µm.

The length (L) in the lengthwise direction of the bare fiber portion 10 is not subject to any special restriction, but is usually 2 to 10 mm.

Also, for the ribbon fiber in accordance with the present invention, as shown in Fig. 1(c), the specially processed fibers 12 may be aligned in such a manner that the lengthwise positional accuracy ΔL of the portion processed as predetermined is ±5 mm.

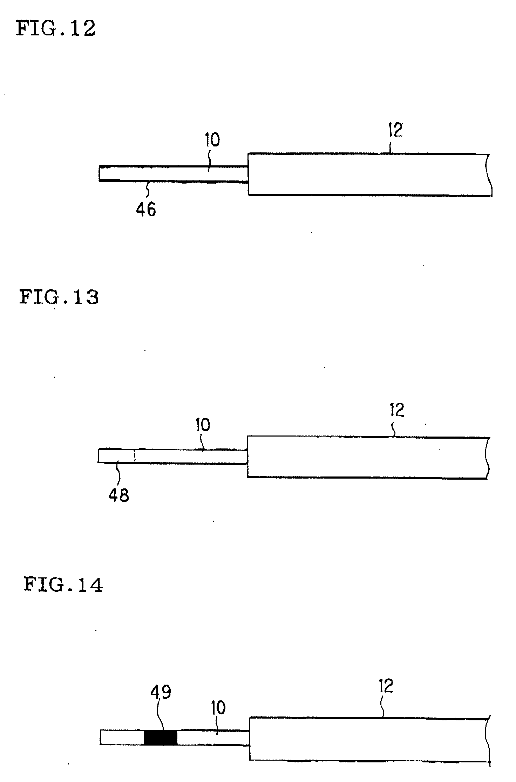

The reason for this is that when a metalized fiber (see Fig. 12), which is one type of specially processed fibers 12, is made into a ribbon form, it is necessary to cause a coating edge (coating removal start portion) to exist in a package sealing portion of a device, so that the lengthwise positional accuracy ΔL of the portion processed as predetermined is required to be about ±5 mm.

Also, when a fiber in which a different type of fiber is fusion welded (see Fig. 13) or a grating fiber (see Fig. 14), which is one type of specially processed fibers 12, is made into a ribbon form, since the total length of fiber array is usually about 10 mm, although a length corresponding to the greatest fiber array length is allowed, it is important where in the fiber array a coating edge is caused to exist, so that the lengthwise positional accuracy ΔL of the portion processed as predetermined is required to be about ±5 mm.

The length (L) in the lengthwise direction of the bare fiber portion 10 is not subject to any restriction, but is usually 2 to 10 mm.

Also, as shown in Fig. 1(b), the length (T) of the ribbon portion 2 need not be longer than is necessary, and it is necessary only that a length contained in the fiber array be made into a ribbon form at the minimum.

However, after the ribbon fiber has been manufactured, if the fibers are not fixed sufficiently before the fiber array is manufactured, the adjusted lengthwise position of the portion processed as predetermined is in danger of being shifted. Also, when the fixing of this portion is deteriorated after the fiber array has been manufactured, there is a danger that a torsional stress etc. caused when the ribbon fiber is manufactured is applied to the fiber array, thereby decreasing the reliability of the fiber array itself. Therefore, the length (T) of the ribbon portion 2 should preferably be more than at least 2 mm.

Further, when the ribbon fiber is incorporated in v-grooves of the fiber array, the work is difficult to perform on the rear outside of fiber array unless the fiber array has stiffness of some degree. Therefore, the length (T) of the ribbon portion 2 should preferably be 300 mm or shorter (usually, about 100 mm).

Further, the number of fibers in the ribbon fiber in accordance with the present invention is not subject to any special restriction. However, the ribbon fiber having five to sixteen fibers (in Fig. 1, eight fibers) can be manufactured easily, and can be used suitably when a fiber array with multiple fibers is manufactured.

As described above, the ribbon fiber in accordance with the present invention can be handled as in the case of the ordinary SM (single mode) ribbon fiber. Therefore, when the optical fiber array is manufactured, the lengthwise position of the portion processed as predetermined needs not be adjusted.

Also, in the conventional method, for example, when a 48-channel optical fiber array is manufactured, regarding the adjustment of the lengthwise position of the portion processed as predetermined, there is an increasing danger of deteriorated evenness with the increase in the number of fibers, and also it is actually difficult to use coating holding jigs (for example, 48 jigs with a pitch of 250 µm) for adjusting the length of each bare fiber portion.

On the other hand, in the present invention, a ribbon is first made in a fiber unit (for example, eight fibers) capable of being aligned while being adjusted precisely at a time, and then the manufactured ribbon fibers are incorporated in V-grooves of the fiber array while the lengthwise position of the portion processed as predetermined is adjusted (for example, in the case of 48 fibers, six ribbons with eight fibers are incorporated. In this case, 48 fibers need not be adjusted, but six ribbons must be adjusted, so that the work efficiency and accuracy increase significantly as compared with the case where 48 fibers are adjusted at a time). Thereby, even a fiber array with a considerable number of fibers or a half-pitch fiber array can be realized.

Further, in the conventional method, if a failure occurs when the lengthwise position of the portion processed as predetermined is adjusted on a V-grooved substrate, which is a fiber array part, fiber array parts themselves including the V-grooved substrate become incapable of being used.

On the other hand, in the present invention, even if the ribbon fiber fails, it is necessary only that the failed, ribbon fiber be replaced with a new one. Therefore, a loss in fiber array parts does not occur at all.

In a manufacturing method for a ribbon fiber in accordance with the present invention, a plurality of specially processed fibers, in which a portion processed as predetermined is formed by subjecting fibers having a bare fiber portion not subjected to predetermined fabrication to predetermined fabrication, are aligned with an exact pitch width while the length is adjusted so that the lengthwise position of the portion processed as predetermined has a predetermined accuracy, and then a part thereof is fixed by and coated with an adhesive to form a ribbon portion.

Thereby, a ribbon fiber using specially processed fibers can be manufactured surely and easily.

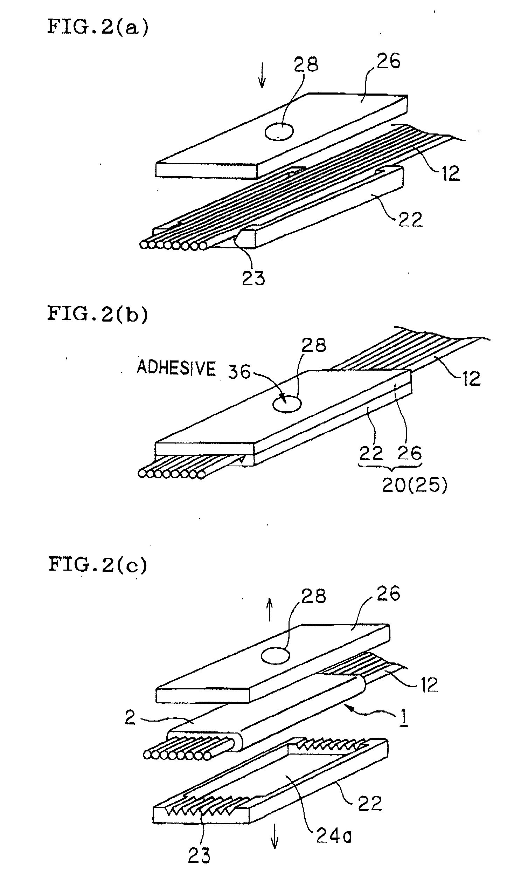

Next, an example of the manufacturing method for a ribbon fiber in accordance with the present invention will be described with reference to Fig. 2.

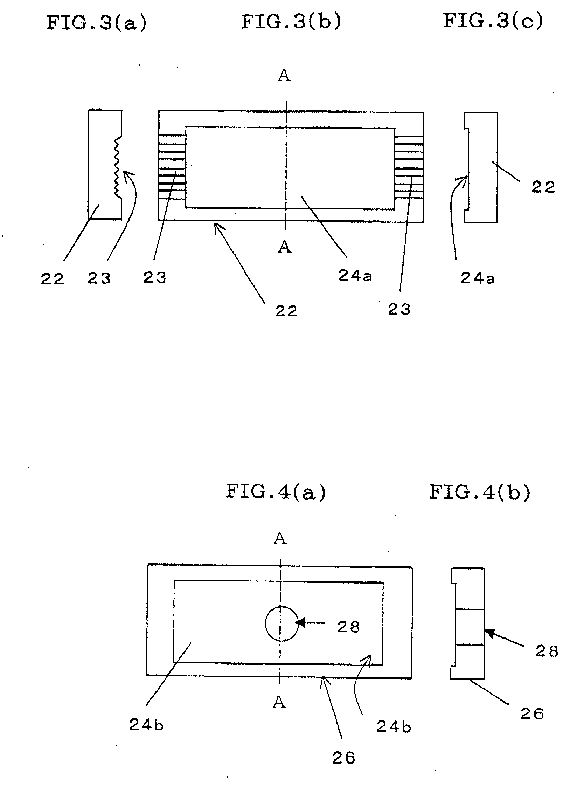

First, as shown in Fig. 2(a), by using a ribbon-making jig 20 consisting of an upper mold 26 and a lower mold 22 each having a ribbon-making groove 24 (see Figs. 3 and 4), a plurality of specially processed fibers 12 are aligned in V-groove portions 23 provided at both ends of a ribbon-making groove 24a in the lower mold 22.

Next, the specially processed fibers 12 are aligned with a precise pitch width while the lengthwise position of the portion processed as predetermined is adjusted at a predetermined accuracy (see Fig. 1(c)).

At this time, the application of the adhesive 36 to a portion in which the specially processed fibers 12 come into contact with each other (for example, specially processed fibers 12 aligned in the ribbon-making groove 24a) is desirable because the interference of the specially processed fibers 12 with each other can be made less liable to be brought about.

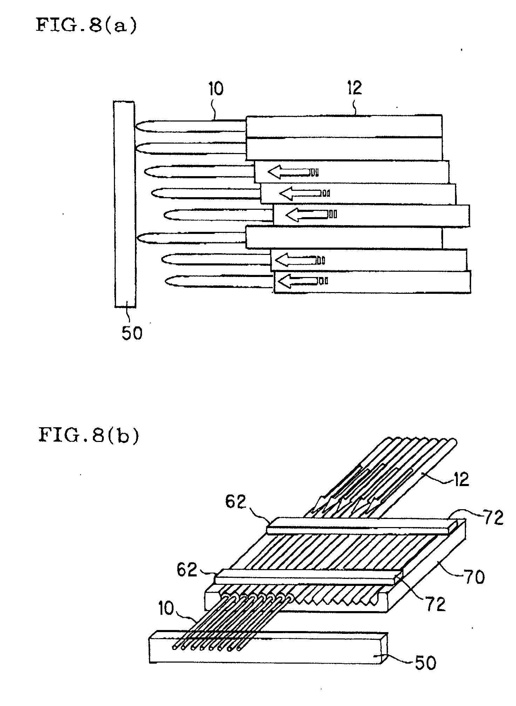

The way of the above-mentioned adjustment is selected appropriately according to the type of specially processed fibers used. For example, as shown in Figs. 8(a) and 8(b), the lengthwise position of the portion processed as predetermined can be made uniform by providing an abutting jig 50 (wall) at the tip end portion of the ribbon-making jig 20 and by causing the portion processed as predetermined to abut on the jig 50.

This method (abutting jig method) is a simple method that does not require special adjustment, so that this method can be used suitably when the specially processed fibers are aligned in such a manner that the lengthwise position of the portion processed as predetermined has an accuracy of ±5 mm.

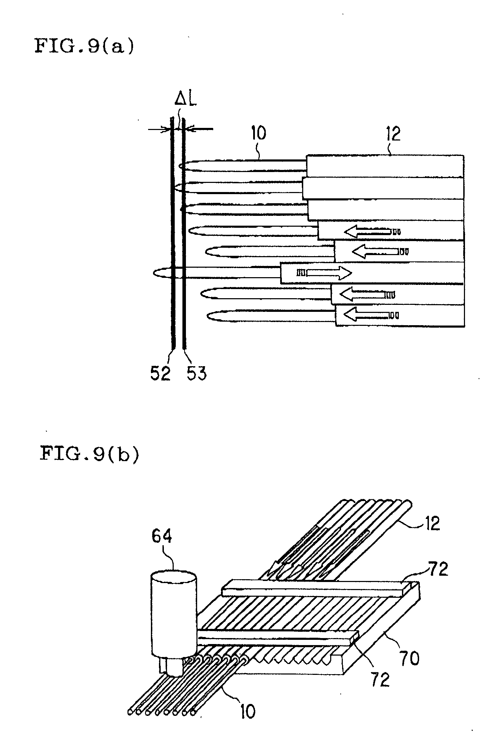

On the other hand, when the specially processed fibers are aligned in such a manner that the lengthwise position of the portion processed as predetermined has an accuracy of +10 µm, for example, the CCD monitor adjustment method shown in Figs. 9(a) and 9(b) is generally used.

In this case, in order to achieve adjustment of several micrometers, observation must be made at considerably high magnification of x500 or higher. However, such high magnification provides a narrow field of view and a considerably shallow depth of focus.

Therefore, as shown in Figs. 9(a) and 9(b), when the length is adjusted while observing an upper part (especially when the end face is flat) or a central part (for example, when the end portion is rounded as in the case of lensed fiber) of fiber, portions in which the edge of a portion (a V-groove in Fig. 9(b)) in which the specially processed fibers 12 ride on a V-grooved substrate 70 and the specially processed fibers 12 are observed have a shifted focal point. Therefore, it is very difficult to recognize, on an observation monitor, where on the V-grooved substrate 70 the fiber is set to.

In such a case, for example, a line is provided on a CCD monitor, and the line is set at right angles to the optical axis. If the position of specially processed fibers is adjusted lengthwise with the line being used as a mark, the observation is easy to make, and thus the adjustment is easy to make.

More specifically, as shown in Fig. 9(a), lines 52 and 53, which are provided on the CCD monitor and set at right angles to the optical axis, are aligned at an interval (ΔL) of several micrometers in advance. The position of specially processed fibers is adjusted lengthwise so that the tip end of the specially processed fibers 12 comes between the lines 52 and 53, whereby highly accurate adjustment can be made.

In the above-described CCD monitor adjustment method, since the field of view becomes narrow when observation is made with high magnification, it is necessary to move the observing system and the observed system to make adjustment successively when multiple specially processed fibers shown in Figs. 9(a) and 9(b) are adjusted. In this case, due consideration must be given to the maintenance of parallelism between the lines 52 and 53 and the moving system and the perpendicularity to the optical axis.

Further, the upper mold 26 is combined with the lower mold 22 as shown in Fig. 2(b), the adhesive 36 is poured into an obtained mold 25 and is cured, and the lower mold 22 and the upper mold 26 are removed as shown in Fig. 2(c), by which the ribbon fiber 1 in accordance with the present invention can be obtained.

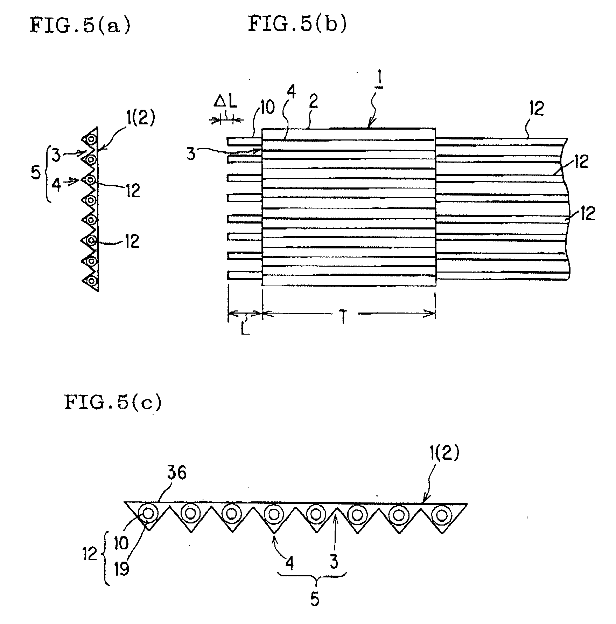

Fig. 5 shows another example of the ribbon fiber in accordance with the present invention. Fig. 5(a) is a left-hand side view, Fig. 5(b) is a front view, and Fig. 5(c) is a detailed view of Fig. 5(a).

As shown in Figs. 5(a) and 5(b), the ribbon fiber 1 in accordance with the present invention is disposed in the almost same plane, consists of the specially processed fibers 12 in the plural number (eight in Figs. 5(a) and 5(b)) extending longitudinally so as to be adjacent to each other substantially in parallel, and partially has the ribbon portion 2 of 2 to 300 mm in length (T).

In the present invention, as shown in Figs. 5(a) and 5(b), the ribbon portion 2 preferably has positioning means, and the positioning means are preferably formed by a series of convex and concave shapes 5.

The series of convex and concave shapes 5 have a regular pitch and are of a saw tooth shape in this example, but they are not subject to any special restriction. For example, the series of convex and concave shapes 5 may be disposed discontinuously, or may have a curved wavy shape or the like.

The reason for this is that in the case where a fiber array having a function as shown in Fig. 3 of JP-A-5-333225 is used, the relative position of the ribbon fiber and the v-groove of fiber array can be set with higher accuracy, and a high-quality fiber array without bent fibers etc. can be obtained.

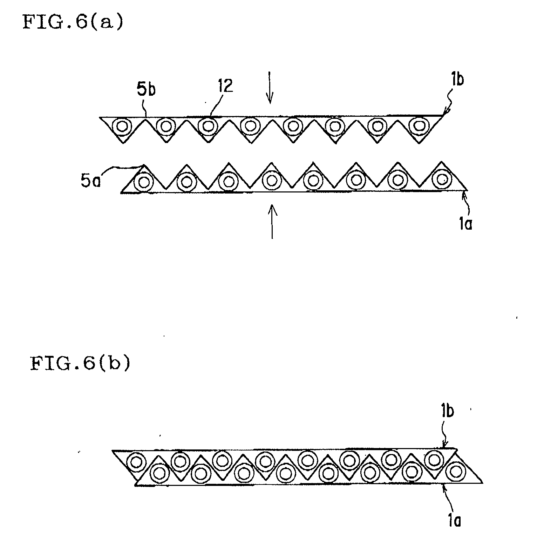

Further, for example, as shown in Figs. 6(a) and 6(b), when a ribbon fiber 1b is lapped on a ribbon fiber 1a, they are lapped on each other so that the positional relationship such that a series of convex and concave shapes 5b of the ribbon fiber 1b engage with a series of convex and concave shapes 5a of the ribbon fiber 1a is established, and a predetermined interval is provided by shifting a series of convex and concave shapes 5b by one or several pitches. Thereby, the right and left positioning of the upper and lower ribbon fibers 1b and 1a can be performed easily.

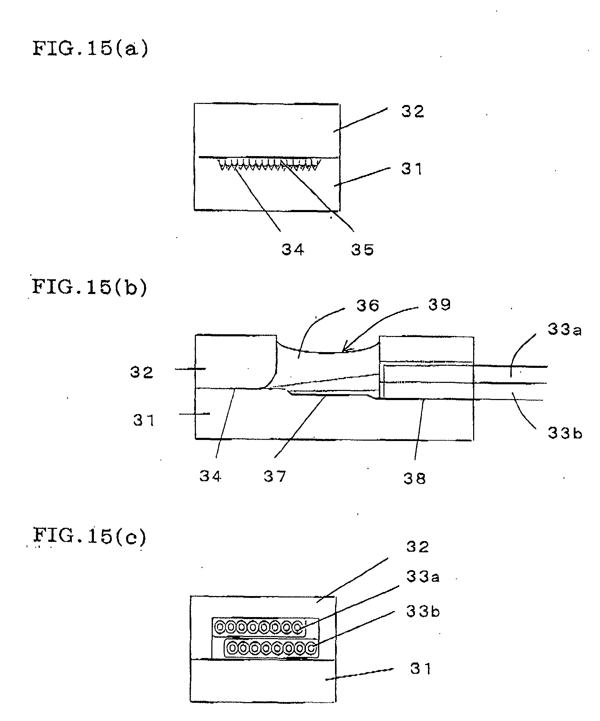

For example, when a half-pitch fiber array shown in Figs. 15(a), 15(b) and 15(c) is manufactured, it is necessary to house the specially processed fibers 12 of the upper and lower ribbon fibers 33a and 33b in a V-groove portion 34 of a lower substrate 31 in a state in which the two flat ribbon fibers 33a and 33b are lapped on each other (see Fig. 15(c)). In order to realize this configuration by using ribbon fibers in which specially processed fibers with a diameter of 125 µm are aligned with a 250 µm pitch, the positioning in the right-and-left directions of the two ribbon fibers 33a and 33b is very important and troublesome work.

However, by using the ribbon fibers shown in Figs. 5(a), 5(b) and 5(c), the positioning in the right-and-left directions of the lapped ribbon fibers can be performed very easily and accurately as shown in Figs. 6(a) and 6(b), so that the merit is very great.

Unlike the ordinary SM (single mode) ribbon fiber, the ribbon fiber in accordance with the present invention cannot be subjected to rework (for example, the tip end portion is removed in a state of a ribbon, and the coating is removed again). Therefore, when the ribbon fiber is manufactured, it is indispensable to adjust the lengthwise position of the portion processed as predetermined so as to have a predetermined accuracy.

For the ribbon fiber in accordance with the present invention, as shown in Fig. 5(c), the ribbon portion 2 is constructed so that the specially processed fibers 12 are fixed by and coated with the adhesive 36, and are preferably aligned in such a manner that the lengthwise positional accuracy ΔL of the portion processed as predetermined is ±10 µm.

The reason for this is that especially when a lensed fiber (see Fig. 10) or a TEC fiber (see Fig. 11), of the types of specially processed fibers 12, is made into a ribbon form, the lengthwise positional accuracy ΔL of the portion processed as predetermined is required to be about =10 µm for the reason of its characteristics.

The length (L) in the lengthwise direction of the bare fiber portion 10 is not subject to any special restriction, but is usually 2 to 10 mm.

Also, for the ribbon fiber in accordance with the present invention, as shown in Fig. 5(c), the specially processed fibers 12 may be aligned in such a manner that the lengthwise positional accuracy ΔL of the portion processed as predetermined is ±5 mm.

The reason for this is that when a metalized fiber (see Fig. 12), which is one type of specially processed fibers 12, is made into a ribbon form, it is necessary to cause a coating edge (coating removal start portion) to exist in a package sealing portion of a device, so that the lengthwise positional accuracy ΔL of the portion processed as predetermined is required to be about ±5 mm.

Also, when a fiber in which a different type of fiber is fusion-welded (see Fig. 13) or a grating fiber (see Fig. 14), which is one type of specially processed fibers 12, is *made* into a ribbon form, since the total length of fiber array is usually about 10 mm, although a length corresponding to the greatest fiber array length may be allowed as a difference in the positional accuracy among the aligned fibers, it is important that a coating edge should exist in the fiber array, so that the lengthwise positional accuracy ΔL of the portion processed as predetermined is required to be about ±5 mm.

The length (L) in the lengthwise direction of the bare fiber portion 10 is not subject to any special restriction, but is usually 2 to 10 mm.

Also, as shown in Fig. 5(b), the length (T) of the ribbon portion 2 need not be longer than is necessary, and it is necessary only that a length contained in the fiber array be made into a ribbon form at the minimum.

However, after the ribbon fiber has been manufactured, if the fibers are not fixed sufficiently before the fiber array is manufactured, the adjusted lengthwise position of the portion processed as predetermined is in danger of being shifted. Also, when the fixing of this portion is deteriorated after the fiber array has been manufactured, there is a danger that a torsional stress etc. caused when the ribbon fiber is manufactured is applied to the fiber array, thereby decreasing the reliability of the fiber array itself. Therefore, the length (T) of the ribbon portion 2 should preferably be at least 2 mm.

Further, when the ribbon fiber is incorporated in V-grooves of the fiber array, the work is difficult to perform on the rear outside of fiber array unless the fiber array has stiffness of some degree. Therefore, the length (T) of the ribbon portion 2 should preferably be 300 mm or shorter (usually, about 100 mm).

Further, the number of fibers in the ribbon fiber in accordance with the present invention is not subject to any special restriction. However, the ribbon fiber having five to twelve fibers (in Fig. 5, eight fibers ) can be manufactured easily, and can be used suitably when a fiber array with multiple fibers is manufactured.

Further, the number of fibers in the ribbon fiber in accordance with the present invention is not subject to any special restriction. However, the ribbon fiber having five to sixteen fibers can be manufactured easily, and can be used suitably when an optical fiber array with multiple fibers is manufactured.

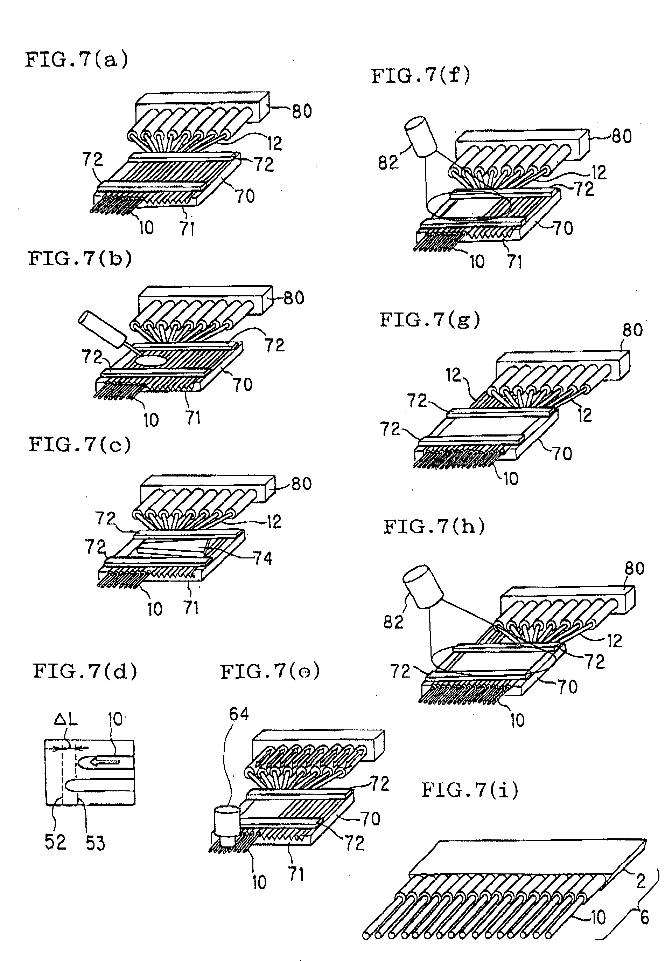

Next, another example of the manufacturing method for a ribbon fiber in accordance with the present invention will be described with reference to Figs. 7 (a) to (i).

After eight specially processed fibers (lensed fibers) 12 are aligned in a V-groove portion provided on the lower mold (V-grooved substrate) 70 of the ribbon-making jig, upper molds (pressing substrates) 72 of the ribbon-making jig are placed at both ends of the V-grooved substrate 70 so that the lengthwise positions of the specially processed fibers 12 can be adjusted in V-grooves 71.

In this case, an inscribed circle of a triangle formed by the V-groove 71 and the pressing substrate 72 should preferably have a diameter slightly larger than that of the specially processed fibers 12.

Next, the specially processed fibers 12 are set in a lengthwise positional adjustment jig 80 in the step shown in Fig. 7 (a), and the adhesive 36 is poured into the V-grooves in the v-grooved substrate 70 in the step shown in Fig. 7 (b). After the adhesive 36 is made uniform with a spatula 74 (Fig. 7 (b)), the lengthwise position of the specially processed fibers 12 is adjusted while the end face of the specially processed fibers 12 is observed with a CCD camera 64 (Fig. 7 (e)).

As shown in Fig. 7 (e), the lines 52 and 53, which are provided on the CCD monitor and set at right angles to the optical axis, are aligned at an interval (ΔL) of several micrometers in advance, and the lengthwise position of specially processed fibers 12 is adjusted so that the tip end of the specially processed fibers 12 (the portion processed as predetermined) comes between the lines 52 and 53 (Fig. 7 (d)).

After the above-described positional adjustment of the lengthwise direction has been made, the adhesive 36 is cured by UV irradiation using a UV lamp 82 to form the ribbon portion 2 (Fig. 7 (f)), and then the pressing substrate 72, the lengthwise positional adjustment jig 80, and the V-grooved substrate 70 are removed, by which the ribbon fiber 1 shown in Figs. 5(a), 5(b) and 5(c) can be obtained.

Also, after the ribbon fiber with eight fibers is formed (Fig. 7 (f)), eight specially processed fibers 12 are aligned in the adjacent V-groove portion of the V-grooved substrate 70, and the steps shown in Fig. 7 (a) to Fig. 7 (f) are carried out. Subsequently, the adhesive 36 is applied again to all of the sixteen fibers (Fig. 7 (g)), and is cured (Fig. 7 (h)), by which a ribbon fiber 6 with sixteen fibers can be obtained (Fig. 7 (i)).

It is preferable that the adhesive 36 used in the present invention be capable of being cured in a short period of time, and have a viscosity of 10000 cP or lower.

The reason for this is that if the curing of adhesive takes much time, fibers move from the state in which the lengthwise position of the fibers has been adjusted, so that there is a danger that the adjusted fiber angle shifts.

Therefore, the adhesive should preferably be cured within 10 minutes. The use of a UV adhesive is preferable because this adhesive can be cured in a period of time as short as 5 minutes or shorter, and moreover there is no adverse influence on the adjusted fiber angle caused by a change in viscosity of adhesive during heating, which may be caused when a thermosetting adhesive is used.

That is, the adhesive used in the present invention should preferably be a UV adhesive, which is capable of being cured in a short period of time, because it is preferable that the specially processed fibers be fixed and coated rapidly after the lengthwise position of the portion processed as predetermined has been adjusted. In particular, the use of urethane acrylate resin, which is an ordinary coating, is more preferable.

The adhesive used in the present invention should preferably have a viscosity of 10000 cP or lower in order to prevent rotational interference of the specially processed fibers with each other by causing the adhesive to serve as a lubricant between the specially processed fibers when the lengthwise position of portion processed as predetermined is adjusted. .

As an adhesive that meets the above-described conditions, for example, urethane acrylate resin having a viscosity of 3000 cP can be cited.

Also, the material for the ribbon-making jig 20, the lower mold (V-grooved substrate) 70, or the upper mold (pressing substrate) 72 is preferably a glass that transmits UV. However, since this material has difficulty in fabricating the ribbon-making grooves 24a and 24b, acrylic resin may be used.

In the case where acrylic resin is used, it is preferable that the thickness of the ribbon-making jig 20, the lower mold (V-grooved substrate) 70, or the upper mold (pressing substrate) 72 be made as small as possible not to hinder the UV transmission.

Also, it is preferable that the inside surface of the ribbon-making jig 20, the lower mold (V-grooved substrate) 70, or the upper mold (pressing substrate) 72 be formed of a material having a peeling effect, or the surface be coated with a peeling agent or subjected to coating to prevent the adhesion of adhesive.

As the specially processed fibers used in the present invention, any one of a lensed fiber, a TEC fiber, a metalized fiber, a fiber in which a different type of fiber is fusion welded, and a grating fiber can be used suitably.

Next, the specially processed fibers used in the present invention will be described with reference to the drawings.

The lensed fiber is a fiber in which the tip end of the bare fiber portion 10 is fabricated into a lens as shown in Fig. 10. A lens portion 40 may have various shapes other than the shape shown in the figure.

The TEC (Thermal Expanded Core) fiber is a fiber in which the core at the tip end of the bare fiber portion 10 is expanded as shown in Fig. 11.

The fiber of this type is characterized in that light can be introduced easily from the tip end of the bare fiber portion 10 due to the provision of an expanded core portion 42.

The specially processed fibers shown in Figs. 10 and 11 are mainly used for coupling laser diodes.

The metalized (coated) fiber is a fiber in which the bare fiber portion 10 is metalized (coated) as shown in Fig. 12, the principal application thereof being sealing.

A fiber formed by fusion-welding different kinds of fibers is used as a waveguide, such a fiber can contribute to the space saving for a device. This is because a converting function to a waveguide can be installed in advance if a fiber prepared by fusion-welding a different kind of fiber 48 to the bare fiber portion 10 as shown in Fig. 13. Thus, it may be used as its principal application for a high NA waveguide.

The grating fiber is a fiber in which a wavelength selecting element (diffraction grating) 49 is provided at a part of the bare fiber portion 10 as shown in Fig. 14, and regarding the principal application, the fiber itself is a wavelength selecting element.

The wavelength selecting element (diffraction grating) 49 can select only a predetermined wavelength by changing the refractive index of a UV irradiated glass by means of the UV irradiation through a mask of a predetermined pattern at a part of the bare fiber portion 10.

As mentioned above, there are used, in the above-mentioned Examples, fibers whose bare fiber portion 10 having been subjected to the predetermined treatment or processing (fabrication) is in an uncoated state. However, one may use fibers whose bare fiber portion 10 having been subjected to the predetermined treatment or processing (fabrication) is coated. In other words, any type of specially processed fibers may be used in the present invention, as far as such fibers can show the predetermined accuracy in the positional accuracy in the lengthwise direction of the portion processed as predetermined. Thus, it should be interpreted that any fiber array formed by using such fibers is included within the scope of the present claimed invention.

As described above, according to the present invention, when an optical fiber array using the specially processed fibers whose bare fiber portion has been subjected to predetermined fabrication is formed, the lengthwise position in the portion processed as predetermined of the fibers need not be adjusted, so that not only a fiber array with multiple fibers and a half-pitch fiber array can be manufactured easily but also the work efficiency and yield can be improved.

## Claims

1. A ribbon fiber which comprises a plural number of aligned processed fibers; said processed fibers having a portion processed as predetermined being formed by subjecting fibers to predetermined processing and a ribbon portion of 2 to 300 mm in length formed in at least some of said treated portion.

2. The ribbon fiber according to claim 1, wherein said processed fibers are any one of the lensed fiber, a TEC fiber, a metalized fiber, a fiber formed by fusion-welding different kinds of fibers, and a grating fiber.

3. The ribbon fiber according to claim 1 or 2, wherein said ribbon portion is provided with a positioning means.

4. The ribbon fiber according to claim 3, wherein said positioning means is formed as a series of convex and concave shapes.

5. The ribbon fiber according to claim 4, wherein said series of convex and concave shapes are disposed with a regular pitch or discontinuously.

6. The ribbon fiber according to claim 5, wherein said series of convex and concave shapes are formed as a saw tooth shape or a curved wavy shape.

7. A manufacturing method for a ribbon fiber which comprises steps of aligning, with a precise pitch width, a plural number of processed fibers; said processed fibers having a portion processed as predetermined being formed by subjecting fibers to predetermined processing while adjusting lengthwise direction of the processed fibers so as to align a position of said portion processed as predetermined at a predetermined accuracy, and then fixing and coating a part of said portion processed as predetermined with an adhesive to form a ribbon portion.

8. A manufacturing method for a ribbon fiber, which comprises steps of
preparing a ribbon-making jig consisting of an upper mold a lower mold having a ribbon-making groove for making a ribbon and a lower mold having a ribbon-making groove for making a ribbon,
aligning, with a precise pitch width, processed fibers; said processed fibers having a portion processed as predetermined being formed by subjecting fibers to predetermined processing, in a V-groove portion provided at both ends of the ribbon-making groove of said lower mold while adjusting lengthwise direction of the processed fibers so as to align a position of said portion processed as predetermined at a predetermined accuracy,
thereafter pouring an adhesive into a mold formed by the ribbon-making grooves in said upper and lower molds and curing said adhesive to form a ribbon portion, and
removing said upper and lower molds to obtain a ribbon fiber.

9. The manufacturing method for a ribbon fiber according to claim 7 or 8, wherein said processed fibers are any one of a lensed fiber, a TEC fiber, a metalized fiber, a fiber formed by fusion-welding different kinds of fibers, and a grating fiber.

10. The manufacturing method for a ribbon fiber according to any one of claims 7 to 9, which further comprises applying an adhesive to a portion in which said processed fibers come into contact with each other when a direction of the portion processed as predetermined is lengthwise adjusted.

11. The manufacturing method for a ribbon fiber according to any one of claims 7 to 10, wherein said adhesive has a viscosity of 10000 cP or lower.

12. The manufacturing method for a ribbon fiber according to claim 11, wherein said adhesive is a urethane acrylate resin.

13. An optical fiber array made of a ribbon fiber according to any one of claims 1 to 6.
